## Europäisches Patentamt

## European Patent Office

## Office européen des brevets

(19)

(11) Veröffentlichungsnummer: **0 246 470**
**B1**

(12) # EUROPÄISCHE PATENTSCHRIFT

(45) Veröffentlichungstag der Patentschrift:
**18.10.89**

(51) Int. Cl.⁴: **F16M 5/00**, F01D 25/28,
E02D 27/44

(21) Anmeldenummer: **87106209.7**

(22) Anmeldetag: **29.04.87**

(54) Verfahren zum Austauschen eines Maschinenteils.

(30) Priorität: **19.05.86  CH 2013/86**

(43) Veröffentlichungstag der Anmeldung:
**25.11.87 Patentblatt 87/48**

(45) Bekanntmachung des Hinweises auf die Patenterteilung:
**18.10.89 Patentblatt 89/42**

(84) Benannte Vertragsstaaten:
**CH DE ES FR LI SE**

(56) Entgegenhaltungen:
**CH-A- 158 620**
**DE-A- 1 813 155**
**FR-A- 1 380 351**
**GB-A- 1 116 261**
**US-A- 4 511 112**

(73) Patentinhaber: **BBC Brown Boveri AG, Haselstrasse,
CH-5401 Baden(CH)**

(72) Erfinder: **Stadelmann, Peter W., Leimbachstrasse 82,
CH-8041 Zurich(CH)**

ACTORUM AG

## Beschreibung

Die Erfindung betrifft ein Verfahren zum Austauschen eines Maschinenteils einer Maschinenanlage, deren massgebliche, miteinandergekuppelte Maschinenteile auf einer gemeinsamen Tischplatte angeordnet sind, welche über Einzelstützen im Boden entweder unmittelbar oder über eine Sohlplatte verankert ist.

Als derartige Maschinenanlage gilt insbesondere die mehrgehäusige Turbogruppe einer Dampfkraftanlage, wobei die Maschinenteile in Form der einzelnen Turbinenteile und des Generators gegeben sind.

Das Austauschen eines Maschinenteils, sei es geplant oder infolge einer Havarie, ist eine extrem zeitaufwendige und somit infolge der langen Stillstandszeiten eine sehr kostenintensive Operation. Selbst wenn die auszutauschenden Maschinenteile in Form von Ersatzelementen bereits vor Ort gelagert sind, schlägt insbesondere deren Neumontage, das Ausrichten und das Prüfen zeitmässig zu Buche.

Wenn zudem noch systembedingte Aenderungen an den bestehenden Fundamenten vorzunehmen sind, so kann es beispielsweise bei einer Nuklearanlage vorkommen, dass dieser Zeitaufwand grösser ist als die für den periodischen Brennstoffwechsel eingeplante Sillstandszeit.

Hier will die Erfindung Abhilfe schaffen. Ihrer Aufgabe liegt die Forderung nach möglichst kurzer Umbauzeit der Anlage zugrunde.

Gelöst wird diese Aufgabe bei einer Anlage der eingangs genannten Art durch die folgenden Verfahrensschritte in ihrem zeitlichen Ablauf: Massgebend ist,

dass in einer Vorbereitungsphase
- auf neuerstellten Hilfsstützen oder auf einem benachbarten Fundamenttisch für das neu anzukuppelnde Maschinenteil eine eigene Tischplatte gefertigt wird, die über Stellelemente auf den Hilfsstützen oder dem vorhandenen Fundamenttisch aufliegt,
- das neu anzukuppelnde Maschinenteil auf dieser Tischplatte mit Lagern versehen, fertig montiert, ausgerichtet und auf alle Funktionen geprüft wird, und dass in einer Austauschphase
- das zu ersetzende Maschinenteil vom verbleibenden Maschinenteil abgekuppelt wird und sein Tischplattenteil von jenem des verbleibenden Maschinenteils und von den Einzelstützen abgetrennt wird,
- entweder das zu ersetzende Maschinenteil mit Hebemitteln entfernt und die abgetrennte Tischplatte abgebrochen wird oder das zu ersetzende Maschinenteil mitsamt abgetrennter Tischplatte auf eine Hilfskonstruktion - vorzugsweise mit hydraulischen Mitteln - verschoben wird,
- worauf die Baueinheit "neuanzukuppelndes Maschinenteil/Tischplatte" mit hydraulischen Mitteln an die Stelle der abgetrennten Tischplatte verschoben und dort über die gleichen Stellelemente auf die Einzelstützen abgesetzt wird,
- und dass nach endgültiger Ausrichtung der Einheit diese ausschliesslich auf den Stellelementen ruht und mit dem Tischplattenteil des verbleibenden Maschinenteils und den Einzelstützen monolithisch verbunden wird.

Besonders zweckmässig ist es, wenn bereits in der Vorbereitungsphase an jenen Einzelstützen, die sich in unmittelbarer Nähe des abzutrennenden Tischplattenteils befinden, Zusatzsäulen angeordnet werden. Ferner sollten bereits in dieser Phase ebenfalls die Verschiebebahnen für das alte und das neue Maschinenteil erstellt werden sowie die Hilfsstruktur für die Aufnahme des alten Maschinenteils.

In der Zeichnung ist ein Ausführungsbeispiel der Erfindung schematisch dargestellt. Es sind nur die für das Verständnis der Erfindung wesentlichen Teile aufgeführt, anhand derer das neue Verfahren erläutert wird.

Es zeigen:

Fig. 1 die Seitenansicht einer Maschinenanlage mit Fundament im Längsschnitt;
Fig. 2 eine perspektivische Ansicht eines Fundämentes bestehend aus Tisch und Einzelstützen;
Fig. 3 in einer Teilansicht das Fundament nach Abbruch des Tischplattenteils;
Fig. 4 die Hilfskonstruktionen und das Vorgehen beim Austauschen;
Fig. 5 ein Stellelement und eine Einstellfeder auf einer Einzelstütze.

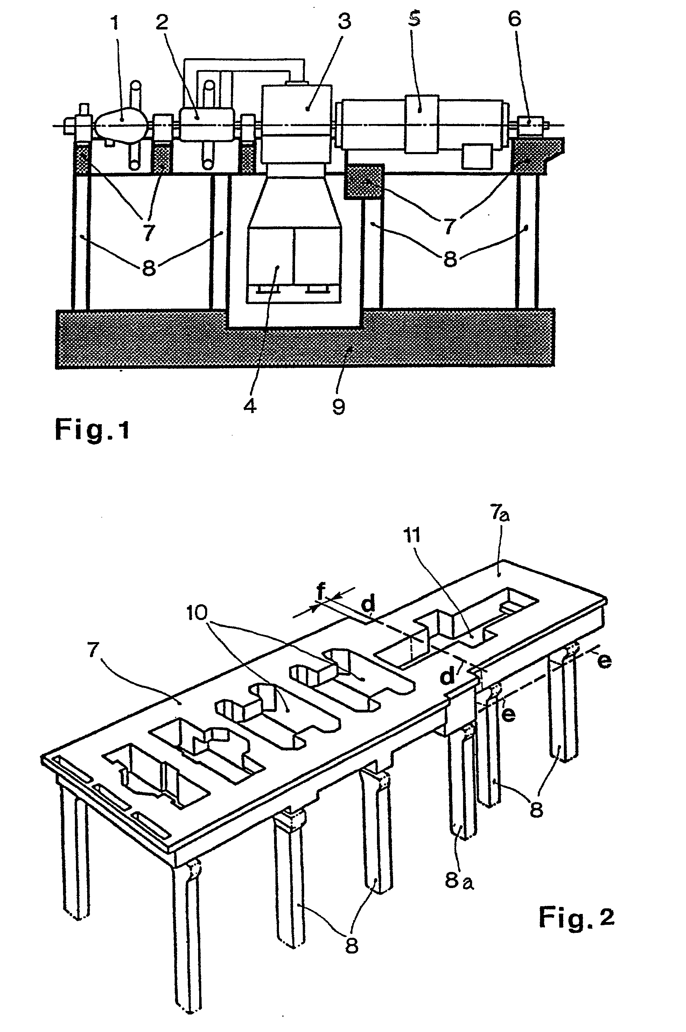

Die Maschinenanlage nach Fig. 1 stellt eine Dampfturbogruppe dar, im wesentlichen bestehend aus einer Hochdruck-Teilturbine 1, einer Mitteldruck-Teilturbine 2 und einer Niederdruck-Teilturbine 3, an die ein Kondensator 4 angehängt ist. Die Teilturbinen sind untereinander sowie mit dem Generator 5 und dem Erreger 6 gekuppelt. Die Turbogruppe steht auf einem Fundament, welches sich hier zusammensetzt aus der Tischplatte 7, mehreren Einzelstützen 8 sowie einer Sohlplatte 9. Von der Tischplatte sind lediglich die Querriegel ersichtlich. Die Sohlplatte 9 liegt auf dem Erdboden auf.

Fig. 2 zeigt ein unbestücktes Fundament für eine grössere Turbogruppe mit zwei Niederdruck-Teilturbinen, für die die Aussparungen 10 vorgesehen sind. Die Aussparung 11 nimmt den Generator auf. Es kann sich sowohl um ein monolithisches Betonfundament als auch um ein Federfundament mit Einzelstützen handeln.

Zur Erläuterung der Erfindung wird angenommen, dass der Generator einer Anlage mit einem Fundament gemäss Fig. 2 innert kürzester Frist zu ersetzen sei. Dies soll in einer geplanten Stillstandsperiode erfolgen.

Nachstehend werden demnach das zu ersetzende und das neu anzukuppelnde Maschinenteil jeweils Generatoren sein, während als verbleibendes Maschinenteil die Gesamtheit der Teilturbinen gilt.

Gemäss Erfindung kann der Wechsel nur dann schnell vor sich gehen, wenn nicht nur der Generator allein ausgetauscht wird, sondern wenn dies zusammen mit dem zugehörigen Tischplattenteil geschieht.

Das Vorgehen unterscheidet nunmehr zwei zeitlich voneinander getrennte Perioden.

In der ersten, sogenannten Vorbereitungsphase sind folgende Massnahmen zu treffen:

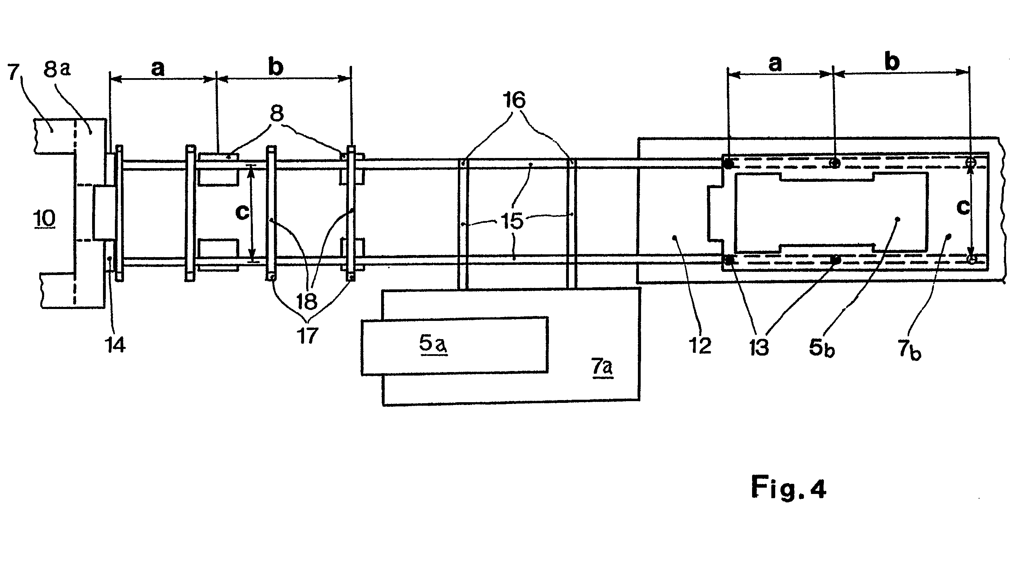

Unter der gemäss Fig. 4 gemachten Annahme, dass in unmittelbarer Nachbarschaft der Maschinenanlage eine Plattform oder ein unbenutztes Fundament 12 in der gleichen Horizontalebene zur Verfügung steht, wird auf diesem Fundament für den neuen Generator 5b eine Betontischplatte 7b in einer zuvor erstellten Verschalung gegossen. Es versteht sich, dass im Bedarfsfall hierzu eine eigene Hilfsplattenform auf entsprechend dimensionierten Säulen zu errichten wäre.

Nach dem Aushärten des Betons wird die Tischplatte 7b mit Hilfsmitteln angehoben und auf Stellelemente 13 abgesetzt, deren Position in Fig. 4 lediglich angedeutet ist. Es ist darauf zu achten, dass diese Stellelemente 13 relativ zur Tischplatte 7b und relativ zueinander die gleichen Abstände a, b, c aufweisen, wie die entsprechenden Einzelstützen 8 unter dem zu entfernenden Generator 5a. Mit dieser Massnahme wird dafür gesorgt, dass die Biegelinie der neu zu erstellenden Baueinheit 5b, 7b in jedem Fall unverändert bleibt. Dies bedeutet, dass sowohl am Ort der Errichtung als auch am Ort der definitiven Aufstellung jeweils die gleiche Deformationskonfiguration vorherrscht. Dies ist insbesondere deshalb wichtig, weil der Dichtspalt bei wasserstoffgekühlten Generatoren nur ca. 1/10 mm beträgt und damit sehr anfällig ist.

Auf der angehobenen Tischplatte 7b wird nun der neue Generator 5b errichtet. Der Stator wird aufgebracht, die Lagerböcke werden montiert, der Rotor wird in den Stator eingefahren und in die Lager abgelegt. Der Generator wird für seine Endposition ausgerichtet. Es erfolgt dann die elektrische Prüfung, wozu als Antrieb ein nicht dargestellter elektrischer Motor angekuppelt wird.

Parallel zur Generatormontage werden unterhalb der Tischplatte 7a des noch in Betrieb stehenden Generators 5a die Nebenanlagen für den neuen Generator 5b vorbereitet. Als Beispiele hierfür seien die Oel- und Wasserstoffversorgung genannt.

Bei der hier betrachteten Fundamentkonfiguration gehören ferner in die Vorbereitungsphase die Errichtung von Zusatzsäulen 14. Entsprechend Abstand a dienen sie der Abstützung des überkragenden Teiles der neuen Tischplatte 7b am Aufstellungsort. Diese Säulen 14 werden bevorzugt an die den hinteren Niederdruck-Turbinenteil tragenden Einzelstützen 8a angegossen.

Desweiteren wird noch der Parkplatz für den auszurangierenden Generator 5a vorbereitet und es werden die Verschiebebahnen 15 auf den Hilfsstützen 16 teilweise errichtet. Nur teilweise deshalb, weil der Platz unterhalb des noch laufenden Generators 5a zu diesem Zeitpunkt noch unzugänglich ist.

Unter dem neuen Generator 5b hingegen kann die Verschiebebahn verlegt werden (gestrichelt in Fig. 4). Hierzu wird die neue Baueinheit Tischplatte + Generator mit Hilfs mitteln etwas angehoben; die Bahnen 15 werden unter die Tischplatte gezogen, worauf die Einheit auf die Verschiebebahn abgesenkt wird.

Schliesslich wird noch eine Hubvorrichtung über dem Generator 5a erstellt. Hierzu werden 8 Tragsäulen 17 seitlich an der Tischplatte 7a hochgezogen. Je zwei gegenüberliegende Säulen werden oberhalb des Generators mit einem Querriegel 18 verbunden. Die Elemente 17, 18 bilden somit 4 Portale.

Die Vorbereitungsphase gilt jetzt als abgeschlossen.

Die Austauschphase beginnt zwangsläufig damit, dass die Turbogruppe abgestellt wird. Der Generator 5a wird von der letzten Niederdruck-Teilturbine abgekuppelt. Alle elektrischen und Rohrverbindungen werden gelöst.

Es gibt nun eine erste Lösung, bei welcher der Generator 5a von der Tischplatte 7a demontiert wird und isoliert entfernt wird; ggfs. unter Herausnahme des Rotors infolge des hohen Gesamtgewichtes. Danach kann die Tischplatte 7a zerstückelt werden.

Eine zweite, wesentlich schnellere Lösung sieht vor, dass Generator 5a mitsamt seiner Tischplatte 7a auf den vorbereiteten Parkplatz verschoben wird.

Hierzu wird die Tischplatte 7a an 8 Stellen mit Zugseilen an den Portalen 17, 18 befestigt.

Anschliessend erfolgt die mechanische Trennoperation. In Fig. 2 sind mit d-d und e-e die zweckmässigsten Trennebenen bezeichnet.

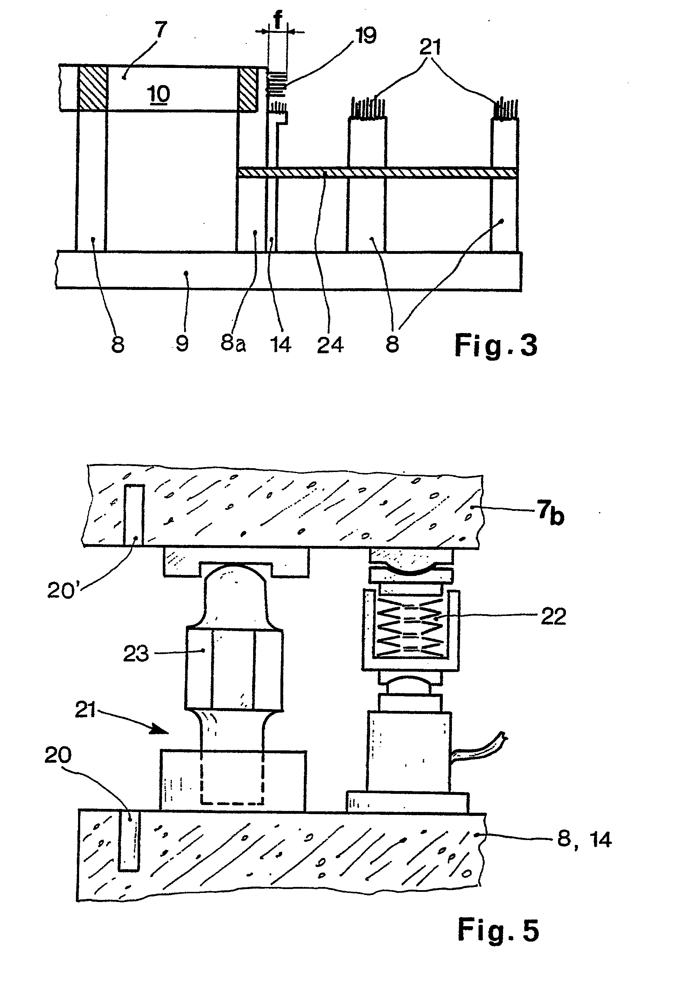

Bei der Trennebene d-d, in welcher der Tischplattenteil 7a vom gemeinsamen Tisch 7 abgelöst wird, ist zu beachten, dass nicht unmittelbar hinter den Einzelstützen 8a ausgeschnitten wird. Vielmehr soll der Schnitt um das Mass f versetzt sein. Dem liegt der Gedanke zugrunde, die im Abschnitt f vorhandenen Armiereisen für die Verbindung mit dem neuen Tischteil zu benutzen. In der Folge werden die Betonmassen im Abschnitt f von Hand abgespitzt, und so die Armiereisen 19 freigelegt (Fig. 3).

Bei der Schnittstelle e-e an den 4 Einzelstützen 8 ist es unvermeidlich, dass die Armierungen mit durchgetrennt werden.

Nach vollzogener Trennung wird die Tischplatte 7a mit den bereits genannten Zugseilen angehoben; die Verschiebebahn 15 wird unter dem Tisch verlegt, worauf dieser auf die Bahn abgesenkt wird und nunmehr schiebefähig ist.

Mit an sich bekannten hydraulischen Mitteln wird die abgetrennte Tischplatte über die teflonbeschichtete Verschiebebahn auf den vorbereiteten Parkplatz manövriert, zunächst in Richtung Maschinenachse, dann quer dazu.

Während dieser Operation können bereits die freien Stirnseiten der abgetrennten Einzelstützen 8 für die Aufnahme der neuen Tischplatte 7b präpariert werden. Gemäss Fig. 5 werden Löcher 20 in die Stützen gebohrt. Diese Massnahme wird auch an den Zusatzsäulen 14 getroffen. Diese Löcher, in der Regel Längsbohrungen, sind für neue Armierungselemente 21 (Fig. 3) bestimmt. Es versteht sich, dass entsprechende Löcher 20' in der Vorbereitungsphase bereits an der Unterseite des neuen Tisches 7a angebracht wurden. Während der Schubphase können auch die obengenannten Armierungseisen 19 am Tisch 7 freigelegt werden.

Mit den hydraulischen Mitteln wird dann die neue Baueinheit 5b, 7b über die Verschiebebahn 15 in ihre Endposition verschoben. Während dieses Verfahrweges ruht die Konstruktion auf den Stellelementen 13 mit den gleichen Stützabständen wie in der Vorbereitungsphase. Das Deformationsverhalten der Einheit bleibt somit unverändert. Um eventuelle Unebenheiten der Verschiebebahn auszugleichen, sind an den Hilfsstützen 16 an sich bekannte hydraulische Flachpressen zur Feinsteinstellung der Bahnhöhe angebracht.

In der Endstellung wird die Baueinheit mittels der bereits genannten Zugseile an die Portale 17, 18 gehängt. Die Verschiebebahn unter dem Tisch 7b wird demontiert. Die Stellelemente 13 werden in den richtigen Abständen a, b, c auf den Einzelstützen 8 und den Zusatzsäulen 14 angeordnet, worauf die Einheit auf die Stellelemente abgesenkt wird. Als Stellelemente finden einfache, über ein Gewinde in der Höhe verstellbare Bolzen 23 Verwendung (Fig. 5).

Es erfolgt nun das Ausrichten der Einheit in allen Ebenen. Hierzu werden gemäss Fig. 5 auf den freien Enden der Stützen 8 und der Säulen 14 Einstellfedern 22 aufgelegt.

Die Vertikalverstellung und die Justierung des Planschlags in der Kupplungsebene erfolgen ausschliesslich über diese hydraulisch betätigten Einstellfedern; die Stellelemente 13 werden lediglich nachgeführt. Hier liegt der Gedanke zugrunde, dass beim Anheben des Tisches an einer bestimmten Stelle keine Deformationen hervorgerufen werden sollen. Zum Beispiel dadurch, dass im Falle von starren Verstellelementen der Tisch an einer andern Stelle abheben würde und sich dadurch durchbiegen könnte.

Das Ausrichten in Längs- und Querrichtung wird mittels entsprechend angeordneten Schubvorrichtungen durchgeführt. Hierbei ruht der Tisch 7b immer noch ausschliesslich auf den Einstellfedern 22. Diese Einstellfedern ermöglichen relativ grosse Horizontalbewegungen, würden allerdings beim Entlasten der jeweiligen Schubvorrichtung zurückfedern und damit die vorgenommene Einstellung zunichte machen. Will man beispielsweise eine seitliche Verschiebung im Zentimeterbereich durchführen, so wird man dies in mehreren Etappen durchführen: Schieben-Stellelemente nachführen-Feder entlasten, Schieben-Stellelemente nachführen-Feder entlasten, usw.

Nach endgültiger Einstellung werden die Federn 22 entfernt. Die Baueinheit ruht jetzt ausschliesslich auf den 6 Stellelementen 13. Der Generator 5b kann nunmehr an die Turbine gekuppelt werden. Bereits während des Ausrichtvorgangs kann der Generator elektrisch und rohrleitungsmässig mit seinen Nebenaggregaten verbunden werden. Diese sind in der Regel auf dem in Fig. 3 dargestellten Zwischenboden 24 unterhalb des Generators aufgestellt.

Zum Abschluss erfolgt noch die monolithische Verbindung der neuen Tischplatte 7b mit dem Turbinentisch 7 und den Stützen 7, 14. Es versteht sich, dass die angrenzende Stirnfläche des neuen Tisches 7b ebenfalls mit Anschlusseisen versehen ist. Diese werden mit den Armierungseisen 19 verflechtet. Der verbleibende Spalt zwischen den Tischteilen 7 und 7b wird geschalt und mit Beton vergossen. An den Stützen 8 und den Säulen 14 wird die Bewehrung 21 um die Stellelemente 13 herum in die Löcher 20, 20' eingebracht; eine Verschalung wird erstellt; Armierung und Stellelemente werden mit Beton vergossen.

Damit ist der Austauschvorgang abgeschlossen; letzten Rohrarbeiten, einer Abschlussprüfung und der anschliessenden Inbetriebsetzung steht nun nichts mehr im Wege.

Es verbleibt zu vermerken, dass im Falle einer 1000 MW Dampfkraftanlage, bei welcher die zu bewegenden Massen 5a, 7a resp. 5b, 7b jeweils ca. 2000 t wiegen, die ausschlaggebende Austauschphase keine 3 Wochen benötigt.

Selbstverständlich ist die Erfindung nicht auf das gezeigte und beschriebene Verfahren beschränkt. In Abweichung zum erläuterten Generatoraustausch können selbstverständlich auf die gleiche Weise einzelne oder mehrere Turbinenteile ausgewechselt werden.

**Patentansprüche**

1. Verfahren zum Austauschen eines Maschinenteils (5a, 5b) einer Maschinenanlage, deren massgebliche, miteinandergekuppelte Maschinenteile (1-6) auf einer gemeinsamen Tischplatte (7) angeordnet sind, welche über Einzelstützen (8) im Boden entweder unmittelbar oder über eine Sohlplatte (9) verankert ist, dadurch gekennzeichnet, dass in einer Vorbereitungsphase
   - auf neuerstellten Hilfsstützen oder auf einem benachbarten Fundamenttisch (12) für das neu anzukuppelnde Maschinenteil (5b) eine eigene Tischplatte (7b) gefertigt wird, die über Stellelemente (13) auf den Hilfsstützen oder dem vorhandenen Fundamenttisch (12) aufliegt,
   - das neu anzukuppelnde Maschinenteil (5b) auf dieser Tischplatte mit Lagern versehen, fertig montiert, ausgerichtet und auf alle Funktionen geprüft wird,
   und dass in einer Austauschphase
   - das zu ersetzende Maschinenteil (5a) vom verbleibenden Maschinenteil (1-3) abgekuppelt wird und sein Tischplattenteil (7a) von jenem (7) des verbleibenden Maschinenteils und von den Einzelstützen (8) abgetrennt wird,
   - entweder das zu ersetzende Maschinenteil (5a) mit Hebemitteln entfernt und die abgetrennte Tischplatte (7a) abgebrochen wird oder das zu ersetzende Maschinenteil (5a) mitsamt abgetrennter Tischplatte (7a) auf eine Hilfskonstruktion - vorzugsweise mit hydraulischen Mitteln - verschoben wird,
   - worauf die Baueinheit "neuanzukuppelndes Maschinenteil/Tischplatte" (7b, 5b) mit hydraulischen Mitteln an die Stelle der abgetrennten Tischplatte verschoben und dort über die gleichen Stellelemente (13) auf die Einzelstützen (8) abgesetzt wird,
   - und dass nach endgültiger Ausrichtung der Einheit (5b, 7b) diese ausschliesslich auf den Stellelementen (13) ruht und mit dem Tischplattenteil (7) des verbleibenden Maschinenteils (1-3) und den Einzelstützen (8) monolithisch verbunden wird.

2. Verfahren nach Anspruch 1, dadurch gekennzeichnet, dass die Stellelemente (13) in der Vorbereitungsphase die gleichen Abstände (a, b, c) untereinander aufweisen als die entsprechenden Einzelstützen (8) unterhalb des zu ersetzenden Maschinenteils (5a).

3. Verfahren nach Anspruch 1, dadurch gekennzeichnet, dass während des Transportes über eine Verschiebebahn (15) die Abstützabstände der Tischplatte (7b) mindestens annähernd die gleichen sind wie in der Vorbereitungsphase.

4. Verfahren nach Anspruch 3, dadurch gekennzeichnet, dass während des Verschiebens der neuen Baueinheit (5b, 7b) - zwecks Vermeidung von Deformationen infolge von Unebenheiten der Verschiebebahn (15) - deren Hilfsstützen (16) mit Flachpressen zur Feineinstellung der Bahnhöhe versehen werden.

5. Verfahren nach Anspruch 1, dadurch gekennzeichnet, dass die Vertikalverstellung der Einheit und die Justierung des Planschlages in der Kupplungsebene mittels Einstellfedern (22) erfolgt, die ebenfalls an den abgetrennten, freien Stirnflächen der Einzelstützen (8) aufliegen und dass anlässlich der Feinverstellung der Einheit in Längs- und Querrichtung die Tischplatte (7b) ausschliesslich auf den Einstellfedern (22) abgestützt ist.

6. Verfahren nach Anspruch 1, dadurch gekennzeichnet, dass zur Abstützung des überkragenden Teils der neuen Tischplatte (7b), welche mit dem Tischplattenteil (7) des verbleibenden Maschinenteils zu verbinden ist, an die unmittelbar benachbarten Einzelstützen (8a) des verbleibenden Maschinenteils (1-3) - vorzugsweise während der Vorbereitungsphase - Zusatzsäulen (14) angegossen werden.

7. Verfahren nach Anspruch 1, dadurch gekennzeichnet, dass für den Fall, dass die Tischplatte (7) und die Einzelstützen (8) aus Stahlbeton bestehen, zur monolithischen Verbindung der Tischplatte (7b) mit den Einzelstützen (8) in der Unterseite der Tischplatte und am freien Stirnende der Einzelstützen Längsbohrungen (20, 20') zur Aufnahme von Armierungselementen (21) vorgesehen sind, welche zusammen mit dem jeweiligen Stellelement (13) mit Beton vergossen werden.

## Revendications

1. Procédé pour remplacer un élément de machine (5a, 5b) dans une installation de machines dont les éléments essentiels (1-6) couplés l'un à l'autre sont déposés sur une table commune (7) qui est ancrée dans le sol au moyen de supports individuels (8), soit directement soit par l'intermédiaire d'une semelle (9), caractérisé en ce que dans une phase de préparation

– sur des supports auxiliaires nouvellement construits ou sur une dalle de fondation (12) voisine destinée au nouvel élément de machine (5b) à coupler, on construit une table propre (7b) qui repose par l'intermédiaire d'organes de réglage (13) sur les supports auxiliaires ou sur la dalle de fondation, (12) existante,
– sur cette table, le nouvel élément de machine (5b) à coupler est pourvu de paliers, son montage est terminé, sa mise en alignement est effectuée et toutes ses fonctions sont contrôlées,
et en ce que, dans une phase de remplacement,

– l'élément de machine (5a) à remplacer est découplé de l'élément de machine subsistant (1-3) et la portion de table correspondante (7a) est séparée de celle (7) de l'élément de machine subsistant ainsi que des supports individuels (8),
– soit l'élément de machine (5a) à remplacer est évacué par des moyens de levage et la table (7a) séparée est éliminée, soit l'élément de machine (5a) à remplacer est, en même temps que la table séparée (7a), amené par glissement sur une structure auxiliaire – de préférence par des moyens hydrauliques,
– ensuite l'ensemble "nouvel élément de machine à coupler/ table" (7b, 5b) est amené par des moyens hydrauliques à la place de la table enlevée et il y est posé sur les supports individuels (8) par les mêmes organes de réglage (13),
– et après l'alignement définitif de l'ensemble (5b, 7b), celui-ci repose exclusivement sur les organes de réglage (13) et est assemblé de manière monolithique à la portion de table (7) de l'élément de machine subsistant (1-3) et aux supports individuels (8).

2. Procédé suivant la revendication 1, caractérisé en ce que les éléments de réglage (13) présentent dans la phase de préparation les mêmes distances (a, b, c) l'un par rapport à l'autre que les supports individuels (8) sous l'élément de machine (5a) à remplacer.

3. Procédé suivant la revendication 1, caractérisé en ce que, pendant le transport sur un chemin de glissement (15), les distances d'appui de la table (7b) sont au moins à peu près les mêmes que dans la phase de préparation.

4. Procédé suivant la revendication 3, caractérisé en ce que, pendant le glissement du nouvel ensemble (5b, 7b) – afin d'éviter les déformations résultant d'irrégularités du chemin de glissement (15) – ses supports auxiliaires (16) sont garnis de presses plates pour le fin réglage de la hauteur du chemin.

5. Procédé suivant la revendication 1, caractérisé en ce que le réglage vertical de l'ensemble et l'ajustement du battement axial dans le plan de couplage sont effectués au moyen de ressorts de réglage (22) qui prennent également appui sur les surfaces d'extrémité libres coupées des supports individuels (8), et en ce qu'à l'occasion du fin réglage de l'ensemble dans les directions longitudinale et transversale, la table (7b) repose exclusivement sur les ressorts de réglage (22).

6. Procédé suivant la revendication 1, caractérisé en ce que, pour supporter la partie en porte-à-faux de la nouvelle table (7b), qui doit être assemblée à la portion de table (7) de l'élément de machine subsistant, on coule des colonnes supplémentaires (14) contre les supports individuels (8a) de l'élément de machine subsistant (1-3) les plus proches – de préférence pendant la phase de préparation.

7. Procédé suivant la revendication 1, caractérisé en ce que, dans le cas où la table (7) et les supports individuels (8) sont réalisés en béton, il est prévu, en vue de l'assemblage monolithique de la table (7b) avec les supports individuels (8), des trous longitudinaux (20, 20') dans la face inférieure de la table et à l'extrémité libre des supports individuels, pour y loger des éléments d'armature (21) qui sont enrobés de béton en même temps que les organes de réglage (13) correspondants.

## Claims

1. Method of replacing a machine part (5a, 5b) of a machine installation whose essential interconnected machine parts (1–6) are arranged on a common base plate (7) which is secured in the ground, either directly or via a base slab (9), by individual supports (8), characterized in that in a preparatory phase,
   – a purpose-built base plate (7b) is produced, on newly erected auxiliary supports or on an adjacent foundation slab (12), for the machine part (5b) newly to be connected, this purpose-built base plate resting on the auxiliary supports or the existing foundation slab (12) via adjusting elements (13),
   – on this base plate, the machine part (5b) newly to be connected is provided with mountings, undergoes final assembly, is aligned and has all its functions tested,
   and in that, in a replacement phase,
   – the machine part (5a) to be replaced is disconnected from the remaining machine part (1–3) and its base plate section (7a) is severed from that (7) of the remaining machine part and from the individual supports (8),
   – either the machine part (5a) to be replaced is removed by lifting means and the severed base plate (7a) is broken away or the machine part (5a) to be replaced is displaced – preferably by hydraulic means – together with the severed base plate (7a), onto an auxiliary structure,
   – whereupon the structural unit comprising the "machine part/base plate newly to be connected" (7b, 5b) is displaced by hydraulic means to take the place of the severed base plate and is there lowered onto the individual supports (8) by means of the same adjusting elements (13),
   – and in that, after the unit (5b, 7b) has received its final alignment, it rests exclusively on the adjusting elements (13) and is monolithically connected to the base plate section (7) of the remaining machine part (1–3) and the individual supports (8).

2. Method according to Claim 1, characterized in that, in the preparatory phase, the adjusting elements (13) are the same distance (a, b, c) apart as the corresponding individual supports (8) underneath the machine part to be replaced (5a).

3. Method according to Claim 1, characterized in that, during transport over a displacement track (15), the support intervals of the base plate (7b) are at least approximately the same as in the preparatory phase.

4. Method according to Claim 3, characterized in that, in order to avoid deformations due to unevenness in the displacement track (15), the auxiliary supports (16) of the new structural unit (5b, 7b) are provided during the displacement with flat presses for fine adjustment of the track height.

5. Method according to Claim, characterized in that the vertical positioning of the unit and the adjustment of the axial run-out in the connection plane are carried out by means of adjusting springs (22) which likewise rest on the severed free end faces of the individual supports (8) and in that, during the exact positioning of the unit in the longitudinal and transverse directions, the base plate (7b) is supported solely on the adjusting springs (22).

6. Method according to Claim 1, characterized in that supplementary pillars (14) are cast against the immediately adjacent individual supports (8a) of the remaining machine part (1–3) – preferably during the preparatory phase – in order to support the overhanging section of the new base plate (7b) which is to be connected to the base plate section (7) of the remaining machine part.

7. Method according to Claim 1, characterized in that, to connect the base plate (7b) monolithically to the individual supports (8), where the base plate (7) and the individual supports (a) are made of steelreinforced concrete, longitudinal bores (20, 20') are provided in the underside of the base plate and in the free end faces of the individual supports to receive reinforcing elements (21) which, together with the respective adjusting element (13), are grouted with concrete.

**Fig.1**

**Fig. 2**

**Fig. 3**

**Fig. 5**

Fig. 4